# EUROPEAN PATENT SPECIFICATION

(11) **EP 3 199 322 B1**
(45) Date of publication and mention of the grant of the patent: **13.03.2019**
(21) Application number: 17152963.9
(22) Date of filing: 25.01.2017
(51) Int. Cl.: B29C 45/76

(54) **INJECTION MOLDING SYSTEM**
SPRITZGIESSSYSTEM
SYSTÈME DE MOULAGE PAR INJECTION

(30) Priority: 29.01.2016 JP 2016016666
(43) Date of publication of application: 02.08.2017
(73) Proprietor: Sumitomo Heavy Industries, Ltd., Tokyo 141-6025 (JP)
(72) Inventor: ABE, Masahiro, Chiba-shi, Chiba 263-0001 (JP)
(74) Representative: Louis Pöhlau Lohrentz

(56) References cited:
- EP-A1- 2 106 896
- AT-U1- 12 820
- DE-A1-102011 102 776
- DE-A1-102012 104 493
- US-A1- 2007 106 420
- US-A1- 2010 065 979

## Description

### BACKGROUND OF THE INVENTION

### Field of the Invention

Certain embodiment of the present invention relates to an injection molding system.

### Description of Related Art

An injection molding machine disclosed in Japanese Unexamined Patent Application Publication No. 2003-200476 includes a molding condition storage unit which stores a molding condition and a read/write unit of a detectable recording medium. The read/write unit writes the molding condition stored in the molding condition storage unit to the recording medium or reads the molding condition stored in the recording medium. If the molding condition is set to one injection molding machine, an operator performing a setting operation by a troublesome manual operation in other injection molding machines is not required.

In the related, in copy of the setting, since a recording medium which can be attached to and detached from the injection molding machine is used, an operation of copying the same setting to multiple machines is complicated.

EP 2 106 896 A1 is directed to an injection molding system.

### SUMMARY OF THE INVENTION

The present invention is made in consideration of the above-described problems, and a main object thereof is to provide an injection molding system capable of easily copying the same setting to multiple machines.

In order to solve the above-described problems, there is provided an injection molding system according to claim 1.

According to the aspect of the present invention, there is provided an injection molding system easily capable of copying the same setting to multiple machines.

### BRIEF DESCRIPTION OF THE DRAWINGS

Fig. 1 is a view showing a state where a mold opening of one injection molding machine included in an injection molding system according to an embodiment is completed.
Fig. 2 is a view showing a state when a mold of one injection molding machine included in the injection molding system according to the embodiment is clamped.
Fig. 3 is a view showing a setting transmission operation screen of a transmission source according to the embodiment.
Fig. 4 is a view showing an item selection operation screen of the transmission source according to the embodiment.
Fig. 5 is a view showing a machine selection operation screen of the transmission source according to the embodiment.
Fig. 6 is a view showing a receiving permission/rejection operation screen of a transmission destination according to the embodiment.
Fig. 7 is a view showing a reflection permission/rejection operation screen of the transmission destination according to the embodiment.
Fig. 8 is a view showing a timing selection operation screen of the transmission destination according to the embodiment.
Fig. 9 is a view showing a reply content display screen of the transmission source according to the embodiment.

### DETAILED DESCRIPTION OF THE INVENTION

Hereinafter, an embodiment of the present invention is described with reference to the drawings. However, in each drawing, the same or corresponding reference numerals are assigned to the same or corresponding configurations, and descriptions thereof are omitted.

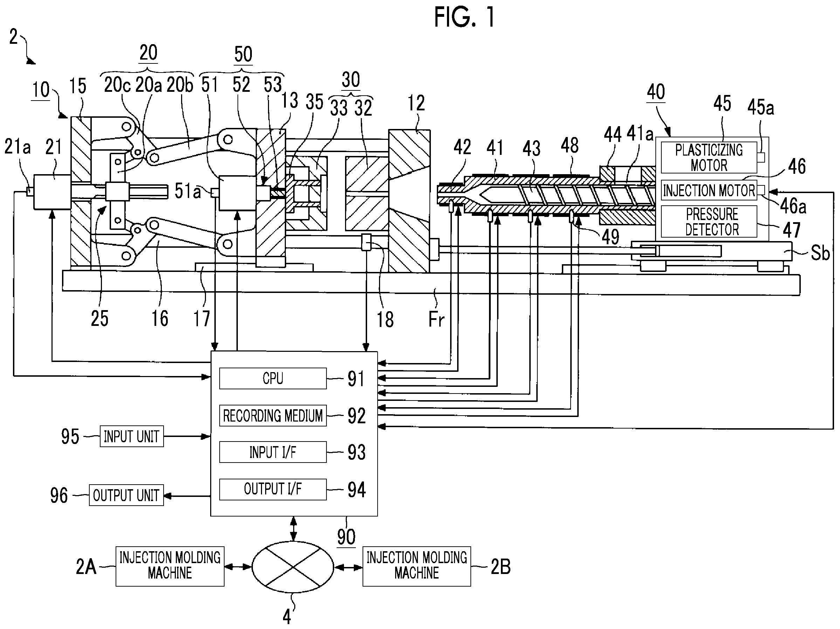

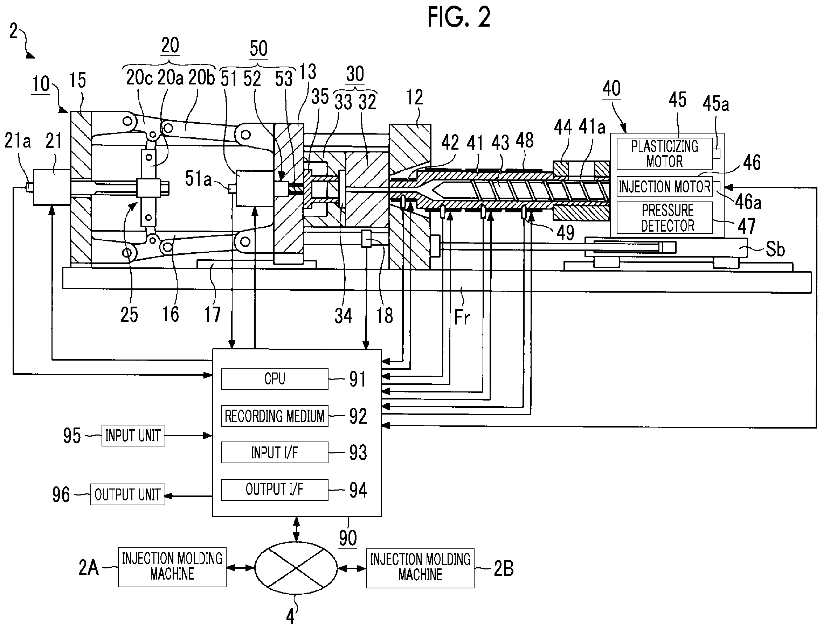

Fig. 1 is a view showing a state where a mold opening of one injection molding machine included in an injection molding system according to an embodiment is completed. Fig. 2 is a view showing a state when a mold of one injection molding machine included in the injection molding system according to the embodiment is clamped. As shown in Figs. 1 and 2, the injection molding machine 2 includes a frame Fr, a mold clamping unit 10, an injection unit 40, an ejector unit 50, and a controller 90, an input unit 95, and an output unit 96.

First, the mold clamping unit 10 and the ejector unit 50 will be described. In the descriptions of the mold clamping unit 10 or like, a movement direction (right direction in Figs. 1 and 2) of a movable platen 13 when a mold is closed is defined as a front side, and a movement direction (left direction in Figs. 1 and 2) of the movable platen 13 when the mold is open is defined as a rear side.

The mold clamping unit 10 performs mold-closing, mold-clamping, and mold-opening of a mold unit 30. The mold clamping unit 10 includes a stationary platen 12, the movable platen 13, a support platen 15, a tie bar 16, a toggle mechanism 20, a mold clamping motor 21, and a movement conversion mechanism 25.

The stationary platen 12 is fixed to the frame Fr. A stationary mold 32 is attached to a surface of the stationary platen 12 facing the movable platen 13.

The movable platen 13 is movable along a guide (for example, guide rail) 17 which is placed on the frame Fr, and is movable forward and backward with respect to the stationary platen 12. A movable mold 33 is attached to a surface of the movable platen 13 facing the stationary platen 12.

By moving the movable platen 13 forward and backward with respect to the stationary platen 12, opening, clamping, and closing of the mold are performed. The mold unit 30 is configured of the stationary mold 32 and the movable mold 33.

The support platen 15 is connected so as to be separated from the stationary platen 12, and is placed to be movable on the frame Fr in mold opening and closing directions . In addition, the support platen 15 may be movable along a guide which is placed on the frame Fr. The guide of the support platen 15 may be also used as the guide 17 of the movable platen 13.

In addition, in the present embodiment, the stationary platen 12 is fixed to the frame Fr, and the support platen 15 is movable in the mold opening and closing directions with respect to the frame Fr. However, the support platen 15 may be fixed to the frame Fr, and the stationary platen 12 may be movable in the mold opening and closing directions with respect to the frame Fr.

The stationary platen 12 and the support platen 15 are connected to each other at intervals by the tie bar 16. A plurality of tie bars 16 may be used. The tie bars 16 are parallel in the mold opening and closing directions, and extend according to a mold clamping force. A mold clamping force detector 18 is provided in at least one tie bar 16. The mold clamping force detector 18 detects the mold clamping force by detecting strain of the tie bar 16, and sends signals indicating detection results to the controller 90.

In addition, the mold clamping force detector 18 is not limited to the strain gauge type detector, and may be a piezoelectric type detector, a capacitance type detector, a hydraulic type detector, an electromagnetic type detector, or the like, and the attachment position of the mold clamping force detector 18 is also not limited to the tie bar 16.

The toggle mechanism 20 moves the movable platen 13 with respect to the stationary platen 12. The toggle mechanism 20 is provided between the movable platen 13 and the support platen 15. The toggle mechanism 20 is configured of a crosshead 20a, a pair of link groups, or the like. Each link group includes a plurality of links 20b and 20c which are bendably/strechably connected by pins or the like. One link 20b is attached so as to be oscillated to the movable platen 13, and the other link 20c is attached so as to be oscillated to the support platen 15. By moving the crosshead 20a forward and backward, the plurality of links 20b and 20c are bent and stretched, and the movable platen 13 moves forward and backward with respect to the support platen 15.

The mold clamping motor 21 is attached to the support platen 15 and operates the toggle mechanism 20. The mold clamping motor 21 moves the crosshead 20a forward and backward, and bends and stretches the links 20b and 20c to move the movable platen 13 forward and backward.

The movement conversion mechanism 25 converts a rotational motion of the mold clamping motor 21 into a linear motion and transmits the linear motion to the crosshead 20a. For example, the movement conversion mechanism 25 is a ball screw mechanism or the like.

The operation of the mold clamping unit 10 is controlled by the controller 90. The controller 90 controls a mold closing process, a mold clamping process, a mold opening process, or the like.

In the mold closing process, by driving the mold clamping motor 21 and moving the crosshead 20a forward at a setting speed, the movable platen 13 moves forward, and the movable mold 33 comes into contact with the stationary mold 32. For example, the position or the speed of the crosshead 20a is detected by an encoder 21a of the mold clamping motor 21 or the like. The signals indicating the detection results are sent to the controller 90.

In the mold clamping process, by further driving the mold clamping motor 21 to further move the crosshead 20a forward to the setting position, a mold clamping force is generated. When the mold is clamped, a cavity space 34 is formed between the movable mold 33 and the stationary mold 32, and the cavity space 34 is filled with a liquid molding material. The molding material filling the cavity space 34 is solidified to obtain a molding product. A plurality of cavity spaces 34 may be used, and in this case, a plurality of molding products can be simultaneously obtained.

In the mold opening process, by driving the mold clamping motor 21 and moving the crosshead 20a backward at a setting speed, the movable platen 13 moves backward, and the movable mold 33 is separated from the stationary mold 32.

In addition, the mold clamping unit 10 of the present embodiment has the mold clamping motor 21 as a drive source. However, instead of the mold clamping motor 21, the mold clamping unit 10 may have a hydraulic cylinder. Moreover, the mold clamping unit 10 may have a linear motor for opening and closing a mold, and may have an electromagnet for clamping a mold.

In addition, the mold clamping unit 10 of the present embodiment is a horizontal type mold clamping unit in which the mold opening and closing directions are the horizontal direction . However, the mold clamping unit 10 may be a vertical type mold clamping unit in which the mold opening and closing directions are the vertical direction.

The ejector unit 50 ejects a molding product from the mold unit 30. The ejector unit 50 includes an ejector motor 51, a movement conversion mechanism 52, and an ejector rod 53.

The ejector motor 51 is attached to the movable platen 13. The ejector motor 51 is directly attached to the movement conversion mechanism 52. However, the ejector motor 51 may be connected to the movement conversion mechanism 52 via a belt, pulley, or the like.

The movement conversion mechanism 52 converts a rotational motion of the ejector motor 51 into a linear motion of the ejector rod 53. For example, the movement conversion mechanism 52 is configured of a ball screw mechanism or the like.

The ejector rod 53 is movable forward and backward in a through hole of the movable platen 13. The front end section of the ejector rod 53 comes into contact with a movable member 35 which is disposed to be movable forward and backward in the movable mold 33. In addition, the ejector rod 53 may be connected to the movable member 35.

The operation of the ejector unit 50 is controlled by the controller 90. The controller 90 controls an ejection process or the like.

In the ejection process, by driving the ejector motor 51 and moving the ejector rod 53 forward, the movable member 35 moves forward, and a molding product is ejected. Thereafter, by driving the ejector motor 51 and moving the ejector rod 53 backward, the movable member 35 moves backward to the original position. For example, the position or the speed of the ejector rod 53 is detected by an encoder 51a of the ejector motor 51. Signals indicating the detection results are sent to the controller 90.

Next, the injection unit 40 will be described. Different from the descriptions of the mold clamping unit 10, in descriptions of the injection unit 40, a movement direction (left direction in Figs. 1 and 2) of a screw 43 during filling is referred to as a front side, and a movement direction (right direction in Figs. 1 and 2) of the screw 43 during plasticizing is referred to as a rear side.

The injection unit 40 is installed on a slide base Sb which is movable forward and backward with respect to the frame Fr, and is movable forward and backward with respect to the mold unit 30. The injection unit 40 is touched on the mold unit 30, and fills the inner portion of the mold unit 30 with the molding material.

For example, the injection unit 40 includes a cylinder 41, a nozzle 42, the screw 43, a cooler 44, a plasticizing motor 45, an injection motor 46, a pressure detector 47, a heater 48, and a temperature detector 49.

The cylinder 41 heats the molding material which is supplied from a supply port 41a to the inner portion of the cylinder 41. The supply port 41a is formed on the rear portion of the cylinder 41. The cooler 44 such as a water-cooling cylinder is provided on the outer periphery of the rear portion of the cylinder 41. The heater 48 such as a band heater and the temperature detector 49 are provided on the outer periphery of the cylinder 41 on the front side of the cooler 44.

The cylinder 41 is divided into a plurality of zones in an axial direction (right-left direction in Figs. 1 and 2) of the cylinder 41. The heater 48 and the temperature detector 49 are provided in each zone. The controller 90 controls the heater 48 such that a temperature which is actually measured by the temperature detector 49 becomes a setting temperature for each zone.

The nozzle 42 is provided on the front end section of the cylinder 41 and is pressed by the mold unit 30. The heater 48 and the temperature detector 49 are provided on the outer periphery of the nozzle 42. The controller 90 controls the heater 48 such that an actually measured temperature of the nozzle 42 becomes a setting temperature.

The screw 43 is disposed to be rotatable and to be movable forward and backward in the cylinder 41.

The plasticizing motor 45 rotates the screw 43 to feed the molding material forward along spiral grooves of the screw 43. The molding material is gradually melted by heat from the cylinder 41 while being fed forward. The liquid molding material is fed to the front portion of the screw 43 and is accumulated in the front portion of the cylinder 41, and thus, the screw 43 moves backward.

The injection motor 46 moves the screw 43 forward and backward. The injection motor 46 moves the screw 43 forward, and thus, the liquid molding material accumulated in the front side of the screw 43 is injected from the cylinder 41, and the inner portion of the mold unit 30 is filled with the liquid molding material. Thereafter, the injection motor 46 presses the screw 43 forward, and applies a pressure to the molding material inside the mold unit 30. Insufficient molding materials can be replenished. A movement conversion mechanism which converts a rotational motion of the injection motor 46 into a linear motion of the screw 43 is provided between the injection motor 46 and the screw 43. This movement conversion mechanism is configured of a ball screw mechanism or the like.

For example, the pressure detector 47 is disposed between the injection motor 46 and the screw 43, and detects a pressure which is applied from the molding material to the screw 43, a back pressure with respect to the screw 43, or the like. The pressure which is applied from the molding material to the screw 43 corresponds to the pressure which is applied from the screw 43 to the molding material. The pressure detector 47 sends signals indicating the detection results to the controller 90.

The operation of the injection unit 40 is controlled by the controller 90. The controller 90 controls a filling process, a holding pressure process, a plasticizing process, or the like.

In the filling process, the injection motor 46 is driven so as to move the screw 43 forward at a setting speed, and the inner portion of the mold unit 30 is filled with the liquid molding material accumulated in the front side of the screw 43. For example, the position or the speed of the screw 43 is detected by an encoder 46a of the injection motor 46, or the like. Signals indicating the detection results are sent to the controller 90. If the position of the screw 43 reaches a setting position, switching from the filling process to the holding pressure process (so called V/P switching) is performed. The setting speed of the screw 43 may be changed according to the position of the screw 43, time, or the like.

In addition, in the filing process, after the position of the screw 43 reaches a setting position, the screw 43 may temporarily stop at the setting position, and thereafter, the V/P switching may be performed. Immediately before the V/P switching, instead of stopping the screw 43, the screw 43 may move forward or may move backward at a very slow speed.

In the holding pressure process, the injection motor 46 is driven so as to press the screw 43 forward at a setting pressure, and a pressure is applied to the molding material inside the mold unit 30. Insufficient molding materials can be replenished. For example, the pressure of the molding material is detected by the pressure detector 47. Signals indicating the detection results are sent to the controller 90.

In the holding pressure process, the molding material inside the mold unit 30 is gradually cooled, and when the holding pressure process is completed, the inlet of the cavity space 34 is closed by the solidified molding material. This state is referred to as a gate seal, and a backflow of the molding material from the cavity space 34 is prevented. After the holding pressure process, a cooling process starts. In the cooling process, solidification of the molding material inside the cavity space 34 is performed. In order to shorten a molding cycle, the plasticizing process may be performed during the cooling process.

In the plasticizing process, the plasticizing motor 45 is driven so as to rotate the screw 43 at a setting rotating speed, and the screw 43 feeds the molding material forward along the spiral grooves of the screw 43. According to this, the molding material is gradually melted. The screw 43 moves backward as the liquid molding material is fed to the front side of the screw 43 and is accumulated in the front portion of the cylinder 41. For example, the rotating speed of the screw 43 is detected by an encoder 45a of the plasticizing motor 45. Signals indicating the detection results are sent to the controller 90.

In the plasticizing process, in order to restrict an abrupt rearward movement of the screw 43, the injection motor 46 may be driven so as to apply a setting back pressure to the screw 43. For example, the back pressure with respect to the screw 43 is detected by the pressure detector 47. Signals indicating the detection results are sent to the controller 90. If the screw 43 moves backward to the setting position and a predetermined amount of the molding materials is accumulated in the front side of the screw 43, the plasticizing process ends.

Moreover, the injection unit 40 of the present embodiment is an inline-screw type injection unit. However, the injection unit 40 may be a pre-plasticizing type injection unit. In the pre-plasticizing type injection unit, a molding material melted in a plasticization cylinder is supplied to the injection cylinder, and the molding material is injected from the injection cylinder into a mold unit. A screw is disposed in the plasticization cylinder to be rotatable or to be rotatable and movable forward and backward, and a plunger is disposed in the injection cylinder to be movable forward and backward.

As shown in Figs. 1 and 2, the controller 90 includes a central processing unit (CPU) 91, a recording medium 92 such as a memory, an input interface 93, and an output interface 94. The controller 90 carries out a program stored in the recording medium 92 using the CPU 91 so as to perform various controls. In addition, the controller 90 receives signals from the outside by the input interface 93 and transmits signals to the outside by the output interface 94.

The input unit 95 receives an input operation of a user and transmits operation signals according to the input operation of the user to the controller 90. For example, a touch panel is used as the input unit 95. The touch panel is also used as an output unit 96 described below.

The output unit 96 displays an operation screen according to the input operation of the input unit 95 by the control of the controller 90. A plurality of operation screens are provided, are displayed so as to be replaced or so as to be overlapped.

A user operates the input unit 95 while viewing the operation screen displayed by the output unit 96 to performs various setting. The setting is stored in the recording medium 92 and is read out if necessary. The recording medium 92 corresponds to a storage unit which is described in claims.

The injection molding system includes a plurality of injection molding machines 2, 2A, and 2B, and a network 4 which is connected to the plurality of injection molding machines 2, 2A, and 2B. The injection molding machines 2A and 2B have the same configuration as that of the injection molding machine 2. The network 4 may be connected to the plurality of injection molding machines 2, 2A, and 2B in a wired manner, or the network 4 may be connected to the plurality of injection molding machines 2, 2A, and 2B in a wireless manner.

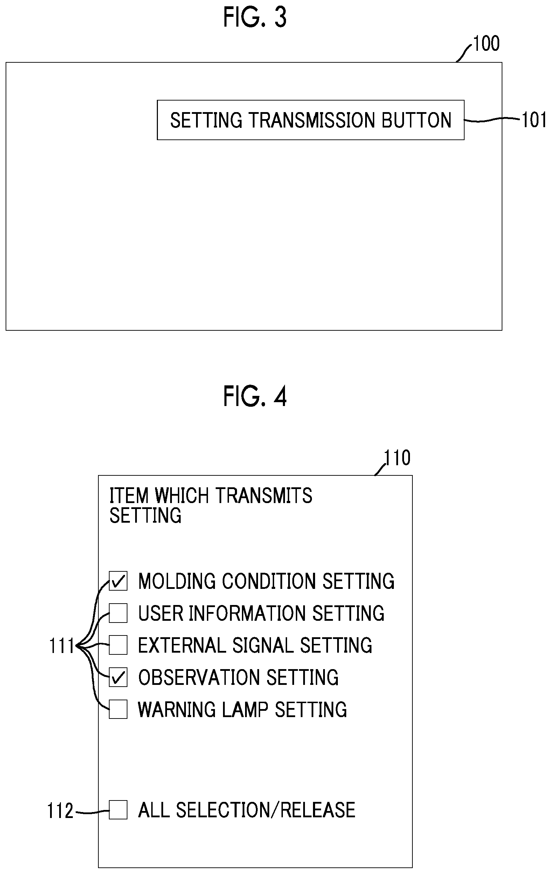

One injection molding machine 2 transmits setting which is stored in advance to other injection molding machines 2A and 2B via the network 4. For example, one injection molding machine 2 includes a setting transmission operation screen 100 (refer to Fig. 3), and when a user operates a setting transmission button 101 of the setting transmission operation screen 100, the one injection molding machine 2 transmits the setting which is stored in advance to other injection molding machines 2A and 2B.

For example, the setting which is transmitted includes at least one of (1) setting of a molding condition, (2) setting of user information, (3) setting of an external signal, (4) setting of monitoring, and (5) setting of a warning lamp.
(1) For example, the setting of the molding condition includes the setting of the mold clamping unit 10, the setting of the injection unit 40, the setting of an ejector unit 50, or the like.
   The controller 90 generates a manipulated variable of a control target device based on a setting value of a controlled variable and a detection value of a controlled variable indicating the molding condition. For example, a power device is used as the control target device, and a motor, a heater, or the like is used. The controller 90 may generate the manipulated variable of the control target device such that the difference between the setting value of the controlled variable and the detection value of the controlled variable is zero. In addition, the control method of the present embodiment is a feedback control. However, a feed forward control may be used.
(2) For example, the setting of the user information includes setting related to authority of an input operation of the operation screen or the like. Different authority is input according to the technique or the skill level of a user, and an item which can be input for each user is set. The authority may include authority related to transmission of the setting, and for example, may include authority which performs an input operation on the setting transmission operation screen 100 or the like.
   The controller 90 allows identification information (for example, a name, an identification number, or the like) of a user to be associated with authority information of the user and stores the association in the recording medium 92. The controller 90 acquires the identification information of a user who operates an operation screen by a reader or the like, and determines permission/rejection of various input operations based on the acquired identification information and the information which is stored in the recording medium 92 is advance . In addition, as the reader, a touch panel, a one-dimensional code reader, a two-dimensional code reader, or the like is used.
(3) For example, the setting of the external signal includes setting of the condition by which a predetermined signal is output from the injection molding machine 2 to an external device, setting of the operation of the injection molding machine 2 which performs permission/rejection according to presence or absence of input of a predetermined signal sent from the external device, or the like. As the external device, there is a take-out device, a belt conveyor, a material supply device, a mold temperature adjustment device, or the like. The take-out device extracts a molding product from the injection molding machine 2. The belt conveyor receives the molding product from the take-out device and transports the molding product. The material supply device supplies a molding material to the injection unit 40. The mold temperature adjustment device adjusts the temperature of the mold unit 30.
   The controller 90 instructs timing of the operation to the external device by outputting a predetermined signal to the external device. In addition, the controller 90 includes an interlock function which permits a preset operation while a predetermined signal is input from the external device and rejects the preset operation while a predetermined signal is not input from the external device. In addition, the interlock function may permit the preset operation while the predetermined signal is not input from the external device and may reject the preset operation while the predetermined signal is input from the external device.
(4) For example, the setting of the monitoring includes setting of an allowance range of detection values of various detectors included in the injection molding machine 2. As the detector, a pressure detector, there is a temperature detector, a position detector, a speed detector, a torque detector, or the like.
   In a case where the detection value of the detector is outside the allowance range, the controller 90 outputs an alarm to the output unit 96 or the like. An image, a sound, or the like is used for the alarm.
(5) For example, the setting of the warning lamp includes display setting of the warning lamp. The warning lamp can identify and display the kind of abnormality of the injection molding machine 2, the external device, or the like. The identification is displayed by a combination of color, or the like.

In a case where the controller 90 detects abnormality, the controller 90 performs display on the warning lamp according to the kind of the detected abnormality. The warning lamp is included in the injection molding machine 2.

As described above, one injection molding machine 2 transmits the setting which is stored in advance to other injection molding machines 2A and 2B via the network 4. Accordingly, compared to a case where setting is copied using the recording medium or the like which can be attached to and detached from the injection molding machines 2, 2A, and 2B, the same setting can be easily copied to the multiple machines. In addition, since setting is transmitted from a setting source, it is possible to prevent erroneous setting from being transmitted.

The one injection molding machine 2 simultaneously transmits the setting which is stored in the recording medium 92 or the like in advance to the plurality of other injection molding machines 2A and 2B via the network 4. Since the same setting can be copied to the multiple machines by one-time operation of the setting transmission button 101, it is possible to reduce the labor of a user.

The injection molding machine 2 which is a transmission source selects an item of the setting which is transmitted to the injection molding machines 2A and 2B which are transmission destinations, from a plurality of items. For example, the injection molding machine 2 which is the transmission source includes an item selection operation screen 110 (refer to Fig. 4), and selects the item of the setting which is to be transmitted to the injection molding machines 2A and 2B which are the transmission destinations according to the input result of the item selection operation screen 110. Only the setting of a specific item can be transmitted.

For example, the item selection operation screen 110 includes an individual item selection field 111 to which whether or not the setting for each item is transmitted is input, and an all item selection field 112 to which whether or not the setting of all items is transmitted is input. As the item, for example, there is (1) a molding condition, (2) user information, (3) an external signal, (4) monitoring, (5) a warning lamp, or the like. (1) The item of the molding condition may be further divided into a plurality of items.

For example, the item selection operation screen 110 is displayed according to a predetermined input operation. A user performs an input operation of the individual item selection field 111 and/or the all item selection field 112 while viewing the item selection operation screen 110.

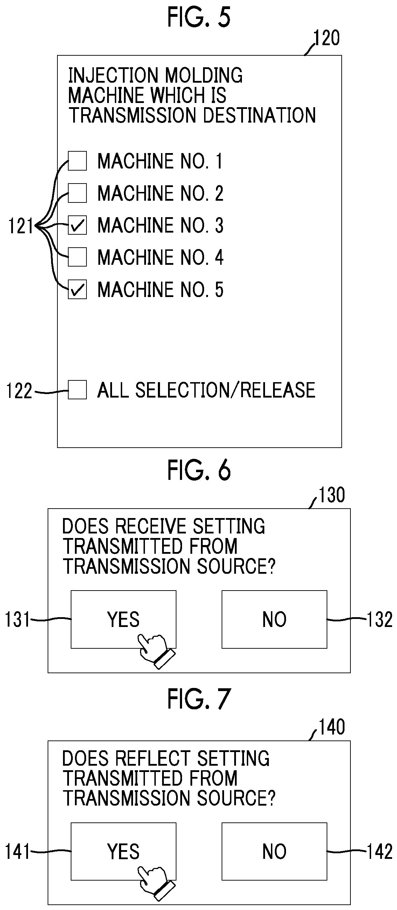

The injection molding machine 2 which is the transmission source selects the injection molding machine which is the transmission destination, from the plurality of injection molding machines 2A and 2B which are connected via the network 4. For example, the injection molding machine 2 which is the transmission source includes a machine selection operation screen 120 (refer to Fig. 5), and selects the injection molding machine which is the transmission destination according to the input result of the machine selection operation screen 120. The setting can be transmitted to only a specific injection molding machine.

For example, the machine selection operation screen 120 includes an individual machine selection field 121 to which whether or not setting is transmitted to each machine is input, and an all machine selection field 122 to which whether or not setting is transmitted to all machines is input. For example, the machine selection operation screen 120 is displayed according to a predetermined input operation. A user performs the input operation of the individual machine selection field 121 and/or the all machine selection field 122 while viewing the machine selection operation screen 120.

In addition, the injection molding machine 2 which is the transmission source monitors driving situations of the plurality of injection molding machines 2A and 2B which are connected via the network 4 and may select the injection molding machine which is the transmission destination based on the monitoring result. For example, the injection molding machine which is selected as the transmission destination is an injection molding machine which is turned on and in which a drive mode is a predetermined mode (for example, a mode except for a full-automatic mode).

For example, as the drive mode of the injection molding machine, there is a "full-automatic mode", a "semi-automatic mode", a "manual mode", a "standby mode", a "turn-off mode", or the like. The "full-automatic mode" is a mode in which a series of processes such as the mold closing process, the mold clamping process, the filling process, the holding pressure process, the plasticizing process, the mold opening process, or the ejection process are automatically performed repeatedly. The "semi-automatic mode" is a mode in which the series of processes are automatically performed once. The "manual mode" is a mode in which the series of processes are performed for each process according to the request of a user. The "standby mode" is a mode in which the output of a drive source such as a motor, a hydraulic cylinder, or an electromagnet is reduced. The "turn-off mode" is a mode in which the operation of the drive source is rejected.

The injection molding machines 2A and 2B which are the transmission destinations select whether or not the injection molding machines 2A and 2B receive the setting transmitted from the injection molding machine 2 which is the transmission source . For example, each of the injection molding machines 2A and 2B which are the transmission destinations includes a receiving permission/rejection operation screen 130 (refer to Fig. 6), and selects whether or not each of the injection molding machines 2A and 2B receives the setting transmitted from the transmission source according to the input result of the receiving permission/rejection operation screen 130. Each of the injection molding machines 2A and 2B can select whether or not each of the injection molding machines 2A and 2B receives the setting transmitted from the transmission source considering the driving situation of the transmission destination or the like.

For example, the receiving permission/rejection operation screen 130 includes a receiving permission button 131 which permits the receiving and a receiving rejection button 132 which rejects the receiving. The receiving permission/rejection operation screen 130 may be displayed when the transmission of the setting performed by the transmission source is detected, or may be displayed according to a predetermined input operation. A user performs the input operation of any one of the receiving permission button 131 and the receiving rejection button 132 while viewing the receiving permission/rejection operation screen 130.

In addition, each of the injection molding machines 2A and 2B which are the transmission destinations may select the permission/rejection of the receiving of the setting transmitted from the transmission source based on the driving situation of each of the injection molding machines 2A and 2B. For example, each of the injection molding machines 2A and 2B which are the transmission destinations may permit the receiving of the setting only in a case where each of the injection molding machines 2A and 2B is turned on and the drive mode is a predetermined mode (for example, a mode except for the full-automatic mode).

In addition, each of the injection molding machines 2A and 2B which are the transmission destinations may select the permission/rejection of the receiving of the setting for each item of the setting. As the item, for example, there is (1) the molding condition, (2) the user information, (3) the external signal, (4) the monitoring, (5) the warning lamp, or the like. (1) The item of the molding condition may be further divided into a plurality of items. In addition, each of the injection molding machines 2A and 2B which are the transmission destinations may select the permission/rejection of the receiving of the setting for each machine which is the transmission source.

Each of the injection molding machines 2A and 2B which are the transmission destinations selects whether or not each of the injection molding machines 2A and 2B reflects the setting which is transmitted from the injection molding machine 2 which is the transmission source. For example, each of the injection molding machines 2A and 2B which are the transmission destinations includes a reflection permission/rejection operation screen 140 (refer to Fig. 7), and selects whether or not each of the injection molding machines 2A and 2B reflects the setting according to the input result of the reflection permission/rejection operation screen 140. Each of the injection molding machines 2A and 2B can select whether or not each of the injection molding machines 2A and 2B reflects the setting considering the driving situations or the like. If the setting is reflected, the injection molding machines 2A and 2B which are the transmission destinations are driven according to the setting of the injection molding machine 2 which is the transmission source.

For example, the reflection permission/rejection operation screen 140 includes a reflection permission button 141 which permits the reflection, and a reflection rejection button 142 which rejects the reflection. The reflection permission/rejection operation screen 140 may be displayed when the transmission of the setting performed by the transmission source is detected, or may be displayed according to a predetermined input operation. A user performs the input operation of any one of the reflection permission button 141 and the reflection rejection button 142 while viewing the reflection permission/rejection operation screen 140.

In addition, each of the injection molding machines 2A and 2B which are the transmission destinations may select the permission/rejection of the reflection of the setting transmitted from the transmission source based on the driving situation of each of the injection molding machines 2A and 2B. For example, each of the injection molding machines 2A and 2B which are the transmission destinations may permit the reflection of the setting only in a case where each of the injection molding machines 2A and 2B is turned on and the drive mode is a predetermined mode (for example, a mode except for the full-automatic mode) .

In addition, each of the injection molding machines 2A and 2B which are the transmission destinations may select the permission/rejection of the reflection of the setting for each item of the setting. As the item, for example, there is (1) the molding condition, (2) the user information, (3) the external signal, (4) the monitoring, (5) the warning lamp, or the like. (1) The item of the molding condition may be further divided into a plurality of items. In addition, each of the injection molding machines 2A and 2B which are the transmission destinations may select the permission/rejection of the reflection of the setting for each machine which is the transmission source.

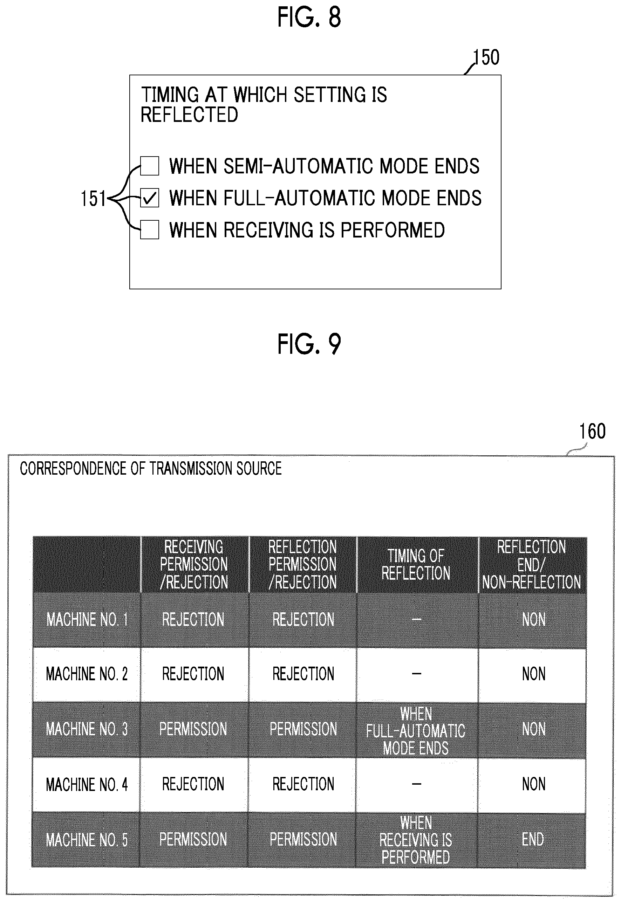

Each of the injection molding machines 2A and 2B which are the transmission destinations selects timing at which the setting transmitted from the injection molding machine 2 which is the transmission source is reflected. For example, each of the injection molding machines 2A and 2B which are the transmission destinations includes a timing selection operation screen 150 (refer to Fig. 8), and selects the timing at which the setting is reflected according to the input result of the timing selection operation screen 150. Each of the injection molding machines 2A and 2B which are the transmission destinations can select the timing at which the setting is reflected considering the driving situation or the like.

For example, the timing selection operation screen 150 includes a timing selection field 151 in which the timing at which the reflection is performed is selected. The timing selection operation screen 150 may be displayed when the transmission of the setting performed by the transmission source is detected, or may be displayed according to a predetermined input operation. A user performs the input operation of the timing selection field 151 while viewing the timing selection operation screen 150.

In addition, each of the injection molding machines 2A and 2B which are the transmission destinations may select the timing at which the setting is reflected based on the driving situation of each of the injection molding machines 2A and 2B. In addition, each of the injection molding machines 2A and 2B which are the transmission destinations may select the timing at which the setting is reflected for each item of the setting. For example, (1) the setting of the molding condition, (3) the setting of the external signal, (4) the setting of the monitoring, or the like may be reflected when the full-automatic mode ends. Meanwhile, (2) the setting of the user information, (5) the setting of the warning lamp, or the like may be reflected when the transmission is performed. Moreover, each of the injection molding machines 2A and 2B which are the transmission destinations may select the timing at which the setting is reflected for each machine which is the transmission source.

Each of the injection molding machines 2A and 2B which are the transmission destinations replies a correspondence, which is selected with respect to the transmission of the setting performed by the injection molding machine 2 which is the transmission source, to the injection molding machine 2 which is the transmission source. For example, each of the injection molding machines 2A and 2B which are the transmission destinations replies each permission/rejection of the receiving, each permission/rejection of the reflection, each timing of the reflection, each reflection end/non-reflection, or the like to the injection molding machine 2 which is the transmission source . The injection molding machine 2 which the transmission source can ascertain the setting situations of the injection molding machines 2A and 2B which are the transmission destinations.

The injection molding machine 2 which is the transmission source includes a screen (refer to Fig. 9) which displays the content of the reply from the injection molding machines 2A and 2B which are the transmission destinations. For example, the screen is displayed in each of the injection molding machines 2A and 2B which are transmission destinations for each permission/rejection of the receiving, each permission/rejection of the reflection, each timing of the reflection, each reflection end/non-reflection, or the like. A user of the transmission source can ascertain the setting situations of the injection molding machines 2A and 2B which are the transmission destinations.

Hereinbefore, the embodiment or the like of the injection molding system is described. However, the present invention is not limited to the above-described embodiment or the like. Various modifications and improvement may be applied to the present invention within the scope which does not depart from the concept of the present invention described in claims.

For example, in the above-described embodiment, the controller 90 functions as the processing device which performs the transmission or receiving of the setting or the reflection. However, the processing device and the controller 90 may be separately provided from each other.

In the above-described embodiment, the specific injection molding machine 2 among the plurality of injection molding machines 2, 2A, and 2B connected via the network 4 is used for only the transmission source. However, all injection molding machines 2, 2A, and 2B may be the transmission source.

In addition, the setting transmitted (firstly transmitted) from the injection molding machine 2 which is a parent to the injection molding machines 2A and 2B which are children may be further transmitted (secondarily transmitted) from the injection molding machines 2A and 2B which are the children to an injection molding machine which is a grandchild. In this way, the transmission may include the transfer, and the number of the transfers is not one but may be a plurality of times.

Among the plurality of injection molding machines 2, 2A, and 2B connected via the network 4, all injection molding machines 2, 2A, and 2B may include a transmission setting screen (including a transfer setting screen) and a receiving setting screen, and each of the injection molding machines 2, 2A, and 2B may include a specific kind of setting screen according to each role of the injection molding machines 2, 2A, and 2B.

### Brief Description of the Reference Symbols

2: injection molding machine, 10: mold clamping unit, 12: stationary platen, 13: movable platen, 15: support platen, 20: toggle mechanism, 21: mold clamping motor, 40: injection unit, 41: cylinder, 42: nozzle, 43: screw, 45: plasticizing motor, 46: injection motor, 47: pressure detector, 50: ejector unit, 51: ejector motor, 52: movement conversion mechanism, 53: ejector rod, 90: controller, 95: input unit, 96: output unit, 100: setting transmission operation screen, 110: item selection operation screen, 120: machine selection operation screen, 130: receiving permission/rejection operation screen, 140: reflection permission/rejection operation screen, 150: timing selection operation screen

## Claims

1. An injection molding system, comprising:
a plurality of injection molding machines (2, 2A, 2B); and
a network (4) which is connected to the plurality of injection molding machines (2, 2A, 2B),
wherein one of the injection molding machines includes a transmitter, **characterized in that** the transmitter is configured to transmit setting stored in a storage unit to other injection molding machines (2A, 2B) via the network (4), wherein the setting includes at least one of setting of a molding condition, setting of user information, setting of an external signal, setting of monitoring, and setting of a warning lamp.

2. The injection molding system according to claim 1,
wherein one of the injection molding machines (2) simultaneously transmits the setting stored in the storage unit to the plurality of other injection molding machines (2A, 2B) via the network (4).

3. The injection molding system according to claim 1 or 2,
wherein the injection molding machine (2) which is a transmission source selects an item of the setting transmitted to the injection molding machine (2A, 2B) which is a transmission destination, from a plurality of items.

4. The injection molding system according to any one of claims 1 to 3,
wherein the injection molding machine (2) which is the transmission source selects the injection molding machine (2A, 2B) which is the transmission destination, from the plurality of injection molding machines (2A, 2B) connected via the network (4) .

5. The injection molding system according to any one of claims 1 to 4,
wherein the injection molding machine (2A, 2B) which is the transmission destination selects whether or not the injection molding machine (2A, 2B) receives the setting transmitted from the injection molding machine (2) which is the transmission source.

6. The injection molding system according to any one of claims 1 to 5,
wherein the injection molding machine (2A, 2B) which is the transmission destination selects whether or not the injection molding machine (2A, 2B) reflects the setting transmitted from the injection molding machine (2) which is the transmission source.

7. The injection molding system according to any one of claims 1 to 6,
wherein the injection molding machine which is the transmission destination (2A, 2B) selects timing when the injection molding machine (2A, 2B) reflects the setting transmitted from the injection molding machine (2) which is the transmission source.

8. The injection molding system according to any one of claims 1 to 7,
wherein the injection molding machine (2A, 2B) which is the transmission destination replies a correspondence, which is selected with respect to the transmission of the setting performed by the injection molding machine (2) which is the transmission source, to the injection molding machine (2) which is the transmission source.

9. The injection molding system according to claim 8,
wherein the injection molding machine which is the transmission source (2) has a screen which displays a content of the reply from the injection molding machine (2A, 2B) which is the transmission destination.

## Patentansprüche

1. Spritzgießsystem, das Folgendes umfasst:
mehrere Spritzgießmaschinen (2, 2A, 2B) und
ein Netzwerk (4), das mit den mehreren Spritzgießmaschinen (2, 2A, 2B) verbunden ist,
wobei eine der Spritzgießmaschinen einen Transmitter einschließt, **dadurch gekennzeichnet, dass** der Transmitter dafür konfiguriert ist, eine in einer Speichereinheit gespeicherte Einstellung über das Netzwerk (4) zu anderen Spritzgießmaschinen (2A, 2B) zu übermitteln, wobei die Einstellung wenigstens eines von einer Einstellung einer Formungsbedingung, einer Einstellung von Benutzerinformationen, einer Einstellung eines externen Signals, einer Überwachungseinstellung und einer Einstellung einer Warmlampe einschließt.

2. Spritzgießsystem nach Anspruch 1,
wobei eine der Spritzgießmaschinen (2) gleichzeitig die in der Speichereinheit gespeicherte Einstellung über das Netzwerk (4) zu den mehreren anderen Spritzgießmaschinen (2A, 2B) übermittelt.

3. Spritzgießsystem nach Anspruch 1 oder 2,
wobei die Spritzgießmaschine (2), die eine Übertragungsquelle ist, einen Gegenstand der Einstellung, die an die Spritzgießmaschine (2A, 2B), die ein Übertragungsziel ist, übermittelt wird, aus mehreren Gegenständen auswählt.

4. Spritzgießsystem nach einem der Ansprüche 1 bis 3, wobei die Spritzgießmaschine (2), welche die Übertragungsquelle ist, die Spritzgießmaschine (2A, 2B), die das Übertragungsziel ist, aus den mehreren Spritzgießmaschinen (2A, 2B) auswählt, die über das Netzwerk (4) verbunden sind.

5. Spritzgießsystem nach einem der Ansprüche 1 bis 4,
wobei die Spritzgießmaschine (2A, 2B), die das Übertragungsziel ist, auswählt, ob die Spritzgießmaschine (2A, 2B) die das Übertragungsziel ist, die Einstellung, die von der Spritzgießmaschine (2), welche die Übertragungsquelle ist, übermittelt wird, empfängt oder nicht.

6. Spritzgießsystem nach einem der Ansprüche 1 bis 5,
wobei die Spritzgießmaschine (2A, 2B), die das Übertragungsziel ist, auswählt, ob die Spritzgießmaschine (2A, 2B) die Einstellung, die von der Spritzgießmaschine (2), welche die Übertragungsquelle ist, übermittelt wird, übernimmt oder nicht.

7. Spritzgießsystem nach einem der Ansprüche 1 bis 6,
wobei die Spritzgießmaschine (2A, 2B), die das Übertragungsziel ist, eine Zeitsteuerung auswählt, wann die Spritzgießmaschine (2A, 2B) die Einstellung, die von der Spritzgießmaschine (2), welche die Übertragungsquelle ist, übermittelt wird, übernimmt.

8. Spritzgießsystem nach einem der Ansprüche 1 bis 7,
wobei die Spritzgießmaschine (2A, 2B), die das Übertragungsziel ist, eine Korrespondenz, die in Bezug auf die Übermittlung der Einstellung, die durch die Spritzgießmaschine (2), welche die Übertragungsquelle ist, durchgeführt wird, ausgewählt wird, an die Spritzgießmaschine (2), welche die Übertragungsquelle ist, erwidert.

9. Spritzgießsystem nach Anspruch 8,
wobei die Spritzgießmaschine (2), welche die Übertragungsquelle ist, einen Bildschirm aufweist, der einen Inhalt der Erwiderung von der Spritzgießmaschine (2A, 2B), die das Übertragungsziel ist, anzeigt.

## Revendications

1. Système de moulage par injection, comprenant :
une pluralité de machines de moulage par injection (2, 2A, 2B) ; et
un réseau (4) qui est connecté à la pluralité de machines de moulage par injection (2, 2A, 2B) ;
dans lequel l'une des machines de moulage par injection inclut un émetteur, **caractérisé en ce que** l'émetteur est configuré de manière à transmettre un réglage stocké dans une unité de stockage à d'autres machines de moulage par injection (2A, 2B), par l'intermédiaire du réseau (4), dans lequel le réglage comprend au moins l'un parmi un réglage d'une condition de moulage, un réglage d'informations d'utilisateur, un réglage d'un signal externe, un réglage de surveillance et un réglage d'une lampe témoin.

2. Système de moulage par injection selon la revendication 1,
dans lequel l'une des machines de moulage par injection (2) transmet simultanément le réglage stocké dans l'unité de stockage à la pluralité d'autres machines de moulage par injection (2A, 2B), par l'intermédiaire du réseau (4).

3. Système de moulage par injection selon la revendication 1 ou 2,
dans lequel la machine de moulage par injection (2) qui correspond à une source de transmission sélectionne un élément du réglage transmis à la machine de moulage par injection (2A, 2B) qui correspond à une destination de transmission, parmi une pluralité d'éléments.

4. Système de moulage par injection selon l'une quelconque des revendications 1 à 3,
dans lequel la machine de moulage par injection (2) qui correspond à la source de transmission sélectionne la machine de moulage par injection (2A, 2B) qui correspond à la destination de transmission, parmi la pluralité de machines de moulage par injection (2A, 2B) connectées par l'intermédiaire du réseau (4).

5. Système de moulage par injection selon l'une quelconque des revendications 1 à 4,
dans lequel la machine de moulage par injection (2A, 2B) qui correspond à la destination de transmission choisit si la machine de moulage par injection (2A, 2B) reçoit ou non le réglage transmis par la machine de moulage par injection (2) qui correspond à la source de transmission.

6. Système de moulage par injection selon l'une quelconque des revendications 1 à 5,
dans lequel la machine de moulage par injection (2A, 2B) qui correspond à la destination de transmission choisit si la machine de moulage par injection (2A, 2B) reflète ou non le réglage transmis par la machine de moulage par injection (2) qui correspond à la source de transmission.

7. Système de moulage par injection selon l'une quelconque des revendications 1 à 6,
dans lequel la machine de moulage par injection qui correspond à la destination de transmission (2A, 2B) sélectionne une temporisation lorsque la machine de moulage par injection (2A, 2B) reflète le réglage transmis par la machine de moulage par injection (2) qui correspond à la source de transmission.

8. Système de moulage par injection selon l'une quelconque des revendications 1 à 7,
dans lequel la machine de moulage par injection (2A, 2B) qui correspond à la destination de transmission répond par une correspondance, qui est sélectionnée relativement à la transmission du réglage mise en oeuvre par la machine de moulage par injection (2) qui correspond à la source de transmission, à la machine de moulage par injection (2) qui correspond à la source de transmission.

9. Système de moulage par injection selon la revendication 8,
dans lequel la machine de moulage par injection qui correspond à la source de transmission (2) est équipée d'un écran qui affiche un contenu de la réponse en provenance de la machine de moulage par injection (2A, 2B) qui correspond à la destination de transmission.
